Europäisches Patentamt

European Patent Office

Office européen des brevets

(19)

(11) Veröffentlichungsnummer: **0 107 809**

**A1**

(12) # EUROPÄISCHE PATENTANMELDUNG

(21) Anmeldenummer: **83109841.3**

(22) Anmeldetag: **01.10.83**

(51) Int. Cl.³: **A 47 J 27/00**
**A 47 J 31/44, B 01 J 47/00**

(30) Priorität: **05.10.82 DE 3236784**

(43) Veröffentlichungstag der Anmeldung:
**09.05.84 Patentblatt 84/19**

(84) Benannte Vertragsstaaten:
**AT BE CH DE FR GB IT LI NL SE**

(71) Anmelder: **FIBEG Beteiligungsgesellschaft mbH**
**Mainzer Strasse 34**
**D-6580 Idar-Oberstein 2(DE)**

(72) Erfinder: **Schumann, Franz W.**
**Am Nauheimer Bach 10**
**D-6350 Bad Nauheim/Nieder-Mörlen(DE)**

(74) Vertreter: **Keil, Rainer A., Dipl.-Phys. Dr. et al,**
**Patentanwälte KEIL & SCHAAFHAUSEN**
**Ammelburgstrasse 34**
**D-6000 Frankfurt am Main 1(DE)**

(54) **Kochgeschirr.**

(57) Die Erfindung bezieht sich auf ein Kochgeschirr, z.B. Kochtopf (1), bei welchem dieser einen Ionenaustauscher (5) und/oder Absorber und/oder Adsorber und/oder Filter und/oder sonstige Einrichtung für den Entzug von Schädlingsbekämpfungsmittel-, Unkrautvernichtungsmittel-, künstlichen Duñgemittel-, Hormonrückständen und dgl. aus dem zuzubereitenden Kochgut, also den zuzubereitenden Nahrungsmitteln, deren Zubereitungsflüssigkeit und/oder deren Dämpfen während des Kochvorganges, aufweist. Hierdurch sollen die genannten Schadstoffe dem Kochgut entzogen werden.

FIG. 1a

EP 0 107 809 A1

Croydon Printing Company Ltd.

**KEIL&SCHAAFHAUSEN**

PATENTANWÄLTE

**6000 Frankfurt am Main 1**

F 5 P 86 EP

29.9.1983

FIBEG Beteiligungsgesellschaft mbH

Mainzer Straße 34

6580 Idar-Oberstein 2

Kochgeschirr

Beschreibung:

Die Erfindung bezieht sich auf ein Kochgeschirr, z.B. Kochtopf.

Nahrungsmittel weisen in zunehmendem Maße Rückstände der bei ihrer Erzeugung verwendeten chemischen Mittel, wie Schädlingsbekämpfungsmittel, Unkrautvernichtungsmittel, künstliche Düngemittel, Hormone und dgl. auf. Eine Ernährung mit sogenannten biologisch gepflegten Nahrungsmitteln ist bei der steigenden Weltbevölkerung kaum sicherzustellen. Auch in Zukunft werden also derartige chemische Mittel für die Erzeugung von Nahrungsmitteln in weitem Umfange notwendig sein. Vorschriften für maximal zulässige Konzentrationen solcher chemischer Mittel können daher dem steigenden Gesundheitsbewußtsein der Bevölkerung bei hinreichender Versorgung mit brauchbaren Nahrungsmitteln nicht gerecht werden.

Aufgabe der vorliegenden Erfindung ist daher die Schaffung eines Kochgeschirrs, mit welchem dem Bedürfnis nach gesunder Ernährung besser Rechnung getragen werden kann.

Diese Aufgabe wird mit der Erfindung dadurch gelöst, daß das Kochgeschirr einen Ionenaustauscher und/oder Absorber und/oder Adsorber und/oder Filter und/oder sonstige Vorrichtung für den Entzug von Schädlingsbekämpungsmittel-, Unkrautvernichtungsmittel-, künstlichen Düngemittel-, Hormonrückständen und dgl. aus dem zuzubereitenden Kochgut, also den zuzubereitenden Nahrungsmitteln, deren Zubereitungsflüssigkeit und/oder deren Dämpfe während des Kochvorganges, aufweist.

Bei der Verwendung eines nach der Erfindung ausgestalteten Kochgeschirrs werden also dem Kochgut zwangsläufig die als schädlich erkannten Rückstände derjenigen chemischen Mittel entzogen, die bei der Herstellung der Nahrungsmittel eingesetzt worden sind. Hierauf ist jedoch der Erfindungsgedanke nicht beschränkt. Bei Auswahl geeigneter Ionenaustauscher, Absorber, Adsorber oder Filter können dem Kochgut auch andere als nachteilig empfundene Bestandteile entzogen werden, die diese von Natur aus enthalten können. Der Entzug der unerwünschten Bestandteile erfolgt vorzugsweise aus der flüssigen oder dampfförmigen Phase des Kochgutes, also insbesondere aus der Zubereitungsflüssigkeit, wenn das Kochgut nicht aus einer Flüssigkeit, wie Milch, alleine besteht, oder den Dämpfen dieser Flüssigkeit.

Damit die Entzugeinrichtung mit der flüssigen oder dampfförmigen Phase des Kochgutes wirksam in Wechselwirkung treten kann, ist sie vorzugsweise in Form eines austauschbaren festen Körpers oder flüssigkeits- und/oder dampfdurchlässigen Behältnisses in bzw. an dem Deckel, der Wandung oder dem Boden angeordnet. Der feste Körper sollte dabei durch Porosität und dgl. eine möglichst große wirksame Oberfläche haben. Die austauschbare

0107809

Anordnung ist deswegen vorgesehen, weil sich die bekannten Ionenaustauscher, Absorber, Adsorber und/oder Filter erfahrungsgemäß verbrauchen und nach einiger Anwendungszeit einen nur noch geringen Wirkungsgrad haben. Die Flüssigkeits- und/oder Dampfdurchlässigkeit des Behältnisses kann beispielsweise dadurch erreicht sein, daß dessen Wandung vollständig oder wenigstens in Teilbereichen Durchtrittsöffnungen, Poren, Kapillaröffnungen od. dgl. aufweist, die den Durchtritt der Flüssigkeit und/oder des Dampfes fördern oder wenigstens gestatten, ohne daß Ionenaustauscher-, Absorber-, Adsorber- oder Filtermaterial aus dem Behältnis austreten können. Diese Ausgestaltungsform ist insbesondere zweckmäßig, wenn das Ionenaustauscher-, Absorber-, Adsorber- und/oder Filtermaterial in loser Form, also beispielsweise als Schüttgut, vorliegt. Hat dieses Material jedoch feste Gestalt, beispielsweise in Form eines porösen Steines od. dgl., so kann die Entzugeinrichtung als solche auch ohne ein Behältnis eingesetzt werden. Wesentlich ist dabei nur, daß sich das Ionenaustauscher-, Absorber-, Adsorber- und/oder Filtermaterial nicht mit den Nahrungsmitteln, deren Zubereitungsflüssigkeit oder deren Dämpfen vermischen kann.

Die Entzugeinrichtung kann beispielsweise in Form eines dem Durchmesser des Bodens entsprechenden kreisrunden scheibenförmigen Körpers oder Behältnisses ausgebildet sein, der entweder lose auf den Boden des Kochgeschirrs zu legen oder mit den angrenzenden Wandungsbereichen des Kochgeschirrs zu verklemmen ist, so daß er insbesondere beim Rühren oder Auskippen des Kochgutes aus dem Kochgeschirr unverrückbar in dem Kochgeschirr gehalten ist. Eine solche Entzugeinrichtung tritt unmittelbar mit dem flüssigen Nahrungsmittel oder dessen Zubereitungsflüssigkeit in Kontakt.

Nach einer weiteren Ausgestaltung des Erfindungsgedankens ist die Entzugeinrichtung in Form eines an dem Deckel austauschbar gehaltenen Körpers oder Behältnisses mit starrer oder
flexibler Wandung ausgebildet. Je nachdem, wie weit die Entzugeinrichtung vom Deckel in das Kochgeschirrinnere hineinragt,
tritt sie nur mit der Dampfphase oder auch mit der Flüssigkeitsphase des Kochgutes in Wechselwirkung. Die Anbringung der
Entzugeinrichtung an dem Deckel hat den Vorteil, daß das entsprechende Kochgeschirr mit und ohne Entzugeinrichtung verwendbar ist, wenn der nach der Erfindung ausgestaltete Deckel
gegen einen üblichen Kochgeschirrdeckel ausgetauscht wird.

Die Entzugeinrichtung kann auch als korbartige Einhängevorrichtung ausgebildet sein, die entsprechende Haken aufweist, die
über den oberen Rand des Kochgeschirrs greifen. Auch hier
kann je nach der Länge dieser Haken, die gegebenenfalls verstellbar ist, eine Wechselwirkung mit der Dampf- und/oder Flüssigkeitsphase des Kochgutes erreicht werden.

So wie dies bei Entkalkern für Kesselwasser schon bekannt
ist, kann die Entzugeinrichtung auch als Einlegekörper in
Form eines Quaders, Zylinders, einer Kugel, eines Beutels
od. dgl. ausgebildet sein. Die Entzugeinrichtung wird dann
bei Bedarf in das Kochgeschirr eingelegt und wieder entnommen.

Weitere Ziele, Merkmale, Vorteile und Anwendungsmöglichkeiten
der vorliegenden Erfindung ergeben sich aus der nachfolgenden
Beschreibung von Ausführungsbeispielen anhand der beiliegenden
Zeichnung. Dabei bilden alle beschriebenen und/oder bildlich
dargestellten Merkmale für sich oder in beliebiger sinnvoller
Kombination den Gegenstand der vorliegenden Erfindung, auch
unabhängig von ihrer Zusammenfassung in den Ansprüchen oder
deren Rückbeziehung.

Es zeigt:

Fig. 1    schematisch verschiedene Ausführungsformen eines die
          Erfindung aufweisenden Kochgeschirrs mit der Anordnung
          einer Entzugeinrichtung an einem Kochtopf,

Fig. 2    schematisch die Anordnung einer der Erfindung entsprechenden Entzugeinrichtung an einem Kochgeschirrdeckel,
          und

Fig. 3    verschiedene Ausführungsformen einer der Erfindung
          entsprechenden Entzugeinrichtung für Kochgeschirr,
          die als Einlegekörper oder Einhängevorrichtung ausgebildet ist.

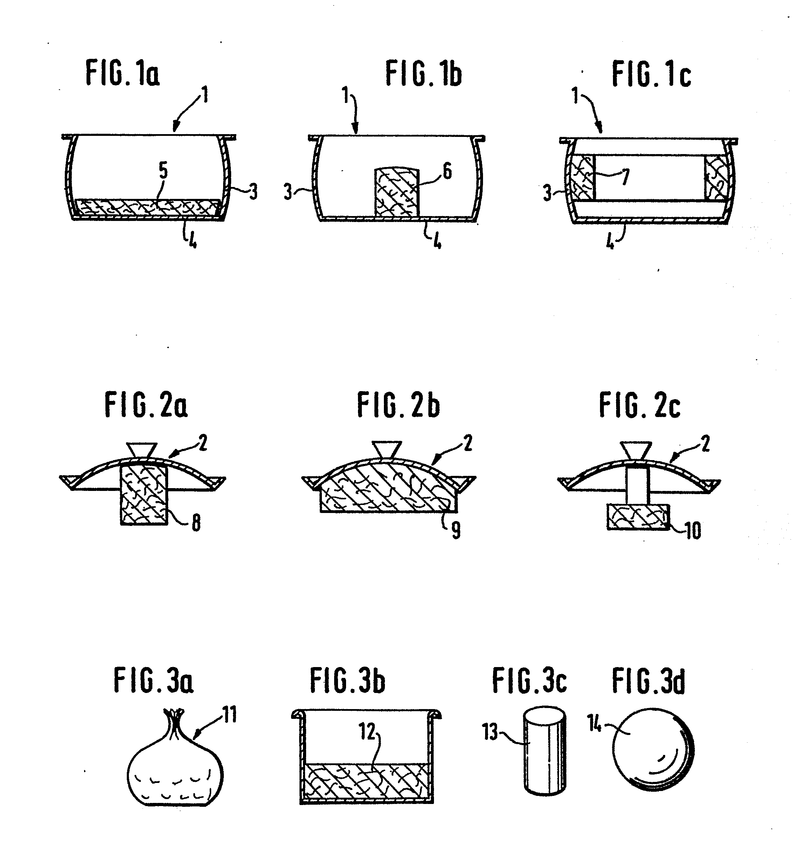

In den Fig. 1a bis 1c sind verschiedene Ausführungsformen
eines die Erfindung aufweisenden topfartigen Kochgeschirrs 1
(dargestellt ohne Deckel) mit verschiedenartigen Einrichtungen
für den Entzug von Schädlingsbekämpfungsmittel-, Unkrautvernichtungsmittel-, künstlichen Düngemittel-, Hormonrückständen und
dgl. wiedergegeben. Sie weisen jeweils einen Ionenaustauscher
und/ oder Absorber und/oder Adsorber und/oder Filter für die zu
entziehenden Schadstoffe auf. Gemäß Fig. 1a ist die Entzugeinrichtung als scheibenförmiges Behältnis 5 mit z.B. aufgrund
von kleinen Öffnungen flüssigkeits- und/oder dampfdurchlässigen
Wandungen ausgebildet, welches den Ionenaustauscher und/oder
Absorber und/oder Adsorber und/ oder Filter z.B. als Schüttgut
enthält. Das scheibenförmige Behältnis 5 hat einen Durchmesser,
der etwa dem Innendurchmesser des Bodens 4 des topfartigen
Kochgeschirrs 1 entspricht, auf welchem Boden 4 das Behältnis 5
angeordnet, z.B. befestigt ist. Nach Fig. 1b ist die Entzugeinrichtung als mit dem Boden 4 des Kochgeschirrs 1 verbundener,
etwa zylindrischer Standkörper 6 ausgebildet, der beispielsweise
ebenfalls aus einem Behältnis mit darin aufgenommenen Ionenaustauscher od. dgl. bestehen oder als fester Körper ausgebildet
sein kann. Bei der Ausführungsform gemäß Fig. 1c besteht die
Entzugeinrichtung in einem ringförmigen Behältnis 7, das auf der
Innenfläche der Wandung 3 des topfartigen Kochgeschirrs 1
gehalten wird.

Fig. 2a zeigt eine Entzugeinrichtung, die in Form eines Hängekörpers 8 von der nach unten weisenden Innenfläche des Geschirrdeckels 2 in den Kochgeschirrinnenraum, gegebenenfalls bis
in das flüssige Kochgut bzw. die Zubereitungsflüssigkeit des
Kochgutes hineinragt, so daß auch hier, wie insbesondere bei
den Ausführungsformen gemäß Fig. 1b und 1c die Entzugeinrichtung sowohl mit der flüssigen als auch der dampfförmigen Phase
des Kochgutes in Wechselwirkung tritt. Bei der Ausführungsform gemäß Fig. 2b ist die Entzugeinrichtung als Deckeleinsatz 9 ausgebildet, dessen obere Oberfläche an die Innenkontur
des Deckels 2 angepaßt ist. Gemäß Fig. 2c ist eine patronenförmige Entzugeinrichtung 10 im Abstand unterhalb des Deckels
2 an diesem gehalten.

Fig. 3a gibt eine erfindungsgemäße Entzugeinrichtung in Form
eines Beutels, der den Ionenaustauscher od. dgl. enthält,
wieder. Dieser Beutel 11 kann entweder entsprechend Fig. 2a
oder 2c an der Unterseite des Deckels 2 aufgehängt oder in
das topfförmige Kochgeschirr 1 hineingelegt werden, wie dies
beispielsweise auch bei den zylindrischen oder kugeligen Einlegekörpern 13 und 14 gemäß Fig. 3c und 3d der Fall ist. Nach
Fig. 3b ist die Entzugeinrichtung als Einhängevorrichtung
12 ausgebildet, die nach Art eines Korbes in das topfartige
Kochgeschirr 1 mittels Haken am oberen Rand des topfartigen
Kochgeschirrs 1 einhängbar ist.

Selbstverständlich lassen sich noch viele andere Ausführungsformen eines Behältnisses oder eines festen Körpers denken,
die den erfindungsgemäßen Zweck erfüllen können. Die zu verwendenden Entzugmaterialien, nämlich Ionenaustauscher, Absorber,
Adsorber, Filter od. dgl. Einrichtung können je nach dem zu
entziehenden Stoff ausgewählt sein und dann in ihrer Form an den bevorzugten Einsatzzweck angepaßt werden. So kann es
für bestimmte Kochgüter zweckmäßig sein, die Entzugeinrichtung
nur mit der flüssigen Zubereitungsflüssigkeit in Berührung
treten zu lassen, während bei anderen Kochgütern die Wechselwirkung mit den Dämpfen am wirkungsvollsten erscheint.

KEIL & SCHAAFHAUSEN
PATENTANWÄLTE

Bezugszeichenliste:

1   Kochgeschirr

2   Deckel

3   Wandung

4   Boden

5   scheibenförmiges Behältnis

6   Standkörper

7   Ringeinsatz

8   Hängekörper

9   Deckeleinsatz

10  Patrone

11  Beutel

12  Einhängevorrichtung

13  zylindrischer Einlegekörper

14  zylindrischer Einlegekörper

KEIL & SCHAAFHAUSEN

PATENTANWÄLTE

6000 Frankfurt am Main 1

0107809

F 5 P 86 EP

29.9.1983

FIBEG Beteiligungsgesellschaft mbH

Mainzer Straße 34

6580 Idar-Oberstein 2

Kochgeschirr

Ansprüche:

1. Kochgeschirr, z.B. Kochtopf, dadurch gekennzeichnet, daß er einen Ionenaustauscher und/oder Absorber und/oder Adsorber und/oder sonstige Vorrichtung für den Entzug von Schädlingsbekämpfungsmittel-, Unkrautvernichtungsmittel-, künstlichen Düngemittel-, Hormonrückständen und dgl. aus dem zuzubereitenden Kochgut, also den zuzubereitenden Nahrungsmitteln, deren Zubereitungsflüssigkeit und/oder deren Dämpfe während des Kochvorganges, aufweist.

2. Kochgeschirr nach Anspruch 1, dadurch gekennzeichnet, daß die Entzugeinrichtung in Form eines austauschbaren festen Körpers oder flüssigkeits- und/oder dampfdurchlässigen Behältnisses (5 bis 14) in bzw. an dem Deckel (2), der Wandung (3) oder dem Boden (4) angeordnet ist.

KEIL & SCHAAFHAUSEN
PATENTANWÄLTE

3. Kochgeschirr nach Anspruch 1 oder 2, dadurch gekennzeichnet, daß die Entzugeinrichtung in Form eines dem Innendurchmesser des Bodens (4) entsprechenden kreisrunden, scheibenförmigen Körpers oder Behältnisses (5) ausgebildet ist.

4. Kochgeschirr nach Anspruch 1 oder 2, dadurch gekennzeichnet, daß die Entzugeinrichtung in Form eines an dem Deckel (2) austauschbar gehaltenen Körpers oder Behältnisses (8 bis 11) mit starrer oder flexibler Wandung ausgebildet ist.

5. Kochgeschirr nach Anspruch 1 oder 2, dadurch gekennzeichnet, daß die Entzugeinrichtung als korbartige Einhängevorrichtung (12) ausgebildet ist.

6. Kochgeschirr nach einem der Ansprüche 1 bis 3, dadurch gekennzeichnet, daß die Entzugeinrichtung als Einlegekörper (5, 6, 11, 13, 14) in Form eines Quaders, Zylinders, einer Kugel, eines Beutels oder dgl. ausgebildet ist.

1/1

**FIG.1a**

**FIG.1b**

**FIG.1c**

**FIG.2a**

**FIG.2b**

**FIG.2c**

**FIG.3a**

**FIG.3b**

**FIG.3c**

**FIG.3d**

**Europäisches Patentamt**

**EUROPÄISCHER RECHERCHENBERICHT**

EP 83 10 9841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-3 014 493 (EMIDE) <br> * Seite 6 * <br> --- | 1,2,6 | A 47 J 27/00 <br> A 47 J 31/44 <br> B 01 J 47/00 |
| X | FR-A-2 254 520 (BAYER AG) <br> * Insgesamt * <br> ----- | 1,2,6 | |

RECHERCHIERTE SACHGEBIETE (Int. Cl. ³)

A 47 J
B 01 J

Der vorliegende Recherchenbericht wurde für alle Patentansprüche erstellt.

| Recherchenort <br> DEN HAAG | Abschlußdatum der Recherche <br> 12-01-1984 | Prüfer <br> SCHARTZ J. |
|---|---|---|